Europäisches Patentamt

**European Patent Office**

**Office européen des brevets**

(19)

(11) Veröffentlichungsnummer: **0 496 099 A2**

(12)

# EUROPÄISCHE PATENTANMELDUNG

(21) Anmeldenummer: **91122067.1**

(22) Anmeldetag: **21.12.91**

(51) Int. Cl.5: **B03D 1/14**, C02F 1/24

(30) Priorität: **27.12.90 DE 4041929**

(43) Veröffentlichungstag der Anmeldung:
**29.07.92 Patentblatt 92/31**

(84) Benannte Vertragsstaaten:
**AT CH DE FR GB IT LI NL**

(71) Anmelder: **Honeywell-Braukmann GmbH**
**Hardhofweg**
**W-6950 Mosbach/Baden(DE)**

(72) Erfinder: **Hoffmann, Anke, Dipl.-Ing.**
**Kantstrasse 30**
**W-6950 Mosbach/Baden(DE)**

(74) Vertreter: **Herzbach, Dieter et al**
**Honeywell Europe S.A. Holding KG Patent-**
**und Lizenzabteilung Kaiserleistrasse 39**
**Postfach 10 08 65**
**W-6050 Offenbach am Main(DE)**

(54) **Flotiervorrichtung.**

(57) Eine Flotiervorrichtung (26) weist eine Kammer (28) auf, die an eine Druckluftquelle angeschlossen ist und durch eine Weichholzscheibe (32) abgeschlossen ist, durch die die Luft in Form von kleinen Gasbläschen entweicht.

Fig. 3

EP 0 496 099 A2

Die vorliegende Erfindung bezieht sich auf eine Flotiervorrichtung nach dem Gattungsbegriff des Patentanspruches 1.

Derartige Flotiervorrichtungen finden beispielsweise Anwendung in Öl/Wasser-Abscheidern. Ihr Arbeitsprinzip beruht darauf, daß aufsteigende Luftbläschen dispergierte Ölbestandteile mit an die Oberfläche transportieren. Die aufsteigenden Luftbläschen können durch Druckentspannung erzeugt werden. Hierzu wird die zu reinigende Flüssigkeit z. B. Kompressorkondensat mit Preßluft (6 bar) gesättigt und nachfolgend entspannt, wobei Luftblasen mit geringem Durchmesser entweichen. Eine weitere Möglichkeit besteht darin, die mikroskopisch feinen Gasbläschen im Abwasser durch Elektrolyse zu erzeugen. Es liegt auf der Hand, daß die Druckentspannungsflotation und die Elektroflotation relativ aufwendige Verfahren darstellen.

Einfacher ist es in diesem Zusammenhang, die Luftbläschen zu erzeugen, indem eine unter Druck stehende Luftkammer über ein feinporöses Material in die zu reinigende Flüssigkeit entlüftet wird. Entsprechende Vorrichtungen sind aus der DE-AS 26 56 477 und der DE-OS 36 37 686 bekannt. Als Materialien werden dort Gewebematten, Sintermaterial oder poröser Kunststoff verwendet. Es hat sich hierbei gezeigt, daß die Erzeugung von Luftblasen mit geeignetem Durchmesser von beispielsweise 0,3 bis 0,8 mm mit den bekannten Vorrichtungen nur schwer zu erzielen sind.

Ausgehend von diesem Stand der Technik ist es daher die Aufgabe der vorliegenden Erfindung, eine Flotiervorrichtung anzugeben, die auf sehr einfache Weise die benötigten Luftblasen zu erzeugen gestattet. Die Lösung dieser Aufgabe gelingt gemäß den kennzeichnenden Merkmalen des Patentanspruches 1. Weitere vorteilhafte Ausgestaltungen der Flotiervorrichtung sind den Unteransprüchen entnehmbar.

Die erfindungsgemäße Verwendung eines Weichholzes, wobei sich Lindenholz besonders bewährt hat, führt zu einer einfachen gerätetechnischen Anordnung mit geringem Energieaufwand für die Überdruckerzeugung, optimalem Luftblasendurchmesser bei keinerlei Dichtungsproblemen, da das leichte Aufquellen des Holzes eine Selbstabdichtung bewirkt.

Anhand eines in den Figuren der beiliegenden Zeichnung dargestellten Ausführungsbeispieles sei im folgenden die Erfindung näher erläutert. Es zeigen:

Fig. 1    eine aufgeschnittene Seitenansicht eines Abscheiders für Kompressorkondensat;

Fig. 2    eine Ansicht gemäß Linie A-A in Fig. 1; und

Fig. 3    eine aufgeschnittene Seitenansicht der Vorrichtung zur Luftblasenerzeugung.

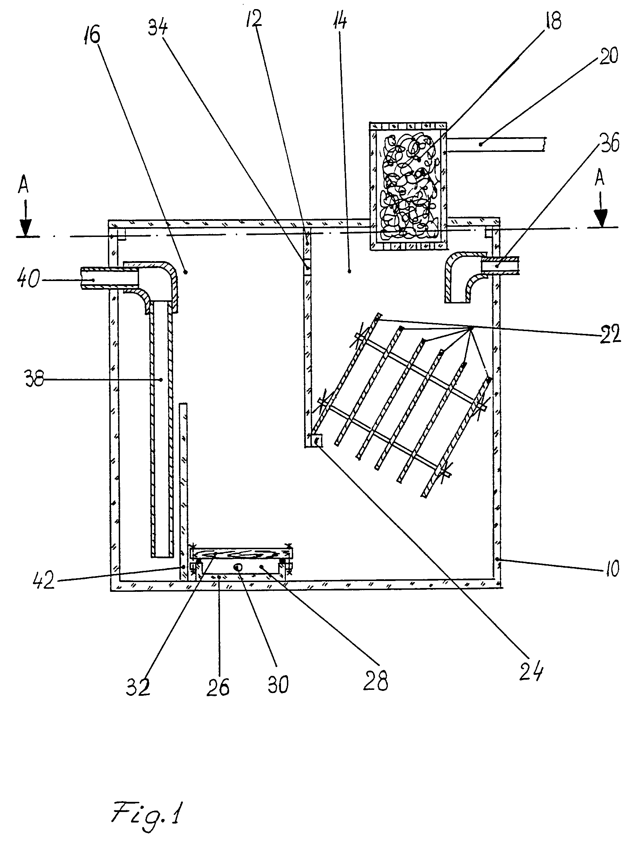

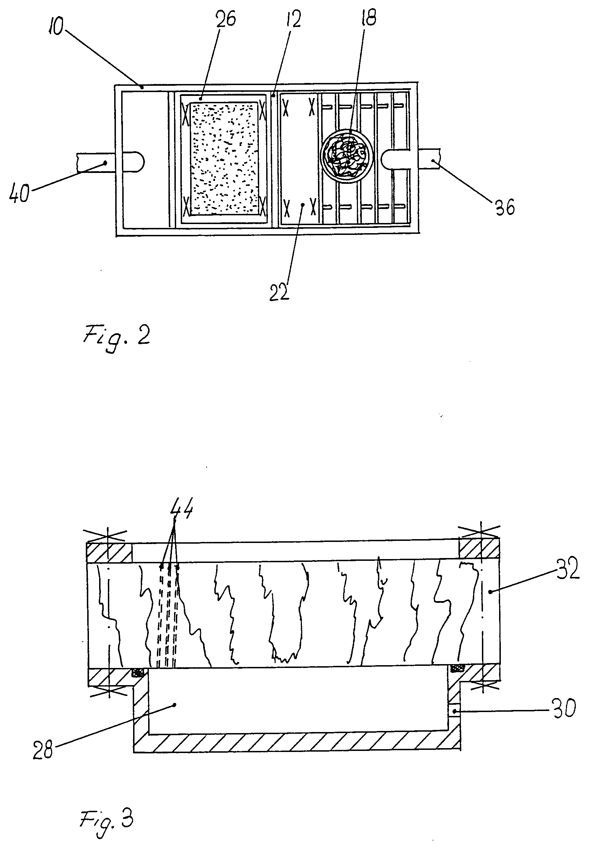

Gemäß den Figuren 1 und 2 ist ein Behälter 10 in seinem oberen Teil durch eine Trennwand 12 in zwei Kammern 14 und 16 unterteilt. In die erste Kammer 14 ist von oben zur Vergleichmäßigung und zur Schalldämmung ein Kunststoffgewebe 18 eingesetzt, dem über eine Leitung 20 Kompressorkondensat von einem nicht dargestellten Kompressor zugeführt wird. Das aus einem Öl/Wasser-Gemisch bestehende Kompressorkondensat tritt an der Unterseite des Kunststoffgewebes 18 aus und gelangt so in die erste Kammer 14. Der Wasserspiegel bleibt bedingt durch die Lage des Auslaufs immer auf gleicher Höhe. Das Öl/Wassergemisch muß einen Vorabscheider, bestehend aus der parallelen Anordnung mehrerer schräg gestellter Parallelplatten 22 passieren. Durch die Halterung 24 kann der Abscheider im geeigneten Neigungswinkel plaziert werden. Auf diese Weise erfolgt eine Vorabscheidung des Öls vom Wasser.

Das verbleibende Öl/Wasser-Gemisch gelangt unter der Tauchwand 12 hindurch in die Kammer 16. Dort ist am Boden eine Flotiervorrichtung 26 angeordnet, die aus einer Kammer 28 besteht, der über einen Anschluß 30 Druckluft zugeführt wird und die nach oben durch die Hirnseite eines Weichholzes 32 abgeschlossen ist. Unter Weichholz wird vorzugsweise Lindenholz verstanden, wobei aber auch Pappelholz verwendet werden kann. Die aufsteigenden Gasblasen bewirken infolge Flotation eine Trennung von Öl und Wasser, wobei das Öl obenauf schwimmt und durch eine Bohrung 34 in der Trennwand 12 einem Ölablaß 36 zugeführt werden kann. Über ein Tauchrohr 38 und einen Ablauf 40 wird das gereinigte Wasser abgeführt, wobei eine weitere auf dem Boden des Behälters 10 angesetzte Trennwand 42 eine Abschirmung gegen das über der Flotiervorrichtung 26 aufsteigende Öl/Wasser-Gemisch vorgibt.

Figur 3 zeigt die Flotiervorrichtung 26 vergrößert in einem Schnitt. Der Kammer 28 wird über den Anschluß 30 Luft mit einem Druck von 0,05 bis 0,25 bar zugeführt. Die Lindenholzscheibe 32 mit einer Dicke von ca. 50 mm dichtet die Kammer 28 ab, wobei die senkrecht verlaufenden Luftkapillaren 44 die unter Druck stehende Luft in feinen Gasbläschen von 0,3 bis 0,8 mm Durchmesser abgeben. Über den Druck in der Kammer 28 kann der Durchmesser der Gasbläschen geregelt werden. Es versteht sich, daß der Schnitt der Lindenholzscheibe 32 an der Hirnseite zu erfolgen hat, damit die Luftkapillaren 44 senkrecht zu der Kammer 28 verlaufen.

## Patentansprüche

1.  Flotiervorrichtung mit einer im Bodenbereich eines Behälters angeordneten durch ein luftdurchlässiges Material nach oben abgeschlossenen Kammer, die an eine Druckluftquelle angeschlossen ist, **dadurch gekennzeichnet,** daß das luftdurchlässige Material aus einem Weichholz (32) besteht.

2.	Flotiervorrichtung nach Anspruch 1, **dadurch gekennzeichnet,** daß das Weichholz (32) mit seiner Hirnseite zu der Kammer (28) gerichtet ist.

3.	Flotiervorrichtung nach Anspruch 1, **dadurch gekennzeichnet,** daß als Weichholz Lindenholz oder Pappelholz verwendet wird.

4.	Flotiervorrichtung nach Anspruch 3, **dadurch gekennzeichnet,** daß der Druck in der Kammer 28 zwischen 0,05 und 0,25 bar einstellbar ist.

5.	Flotiervorrichtung nach Anspruch 3, **dadurch gekennzeichnet,** daß das Lindenholz eine Dicke von ca. 50 mm aufweist.

Fig.1

Fig. 2

Fig. 3